# EUROPÄISCHE PATENTSCHRIFT

(11) **EP 3 623 656 B1**
(45) Veröffentlichungstag und Bekanntmachung des Hinweises auf die Patenterteilung: **27.01.2021**
(21) Anmeldenummer: 18194725.0
(22) Anmeldetag: 17.09.2018
(51) Int. Cl.: F16D 65/00, F16D 55/226

(54) **BREMSSATTEL EINER SCHEIBENBREMSE FÜR KRAFTFAHRZEUGE**
BRAKE CALLIPER OF A DISK BRAKE FOR MOTOR VEHICLES
ÉTRIER DE FREIN D'UN FREIN À DISQUE POUR VÉHICULES AUTOMOBILES

(43) Veröffentlichungstag der Anmeldung: 18.03.2020
(73) Patentinhaber: WABCO Europe BVBA, 1170 Brüssel (BE)
(72) Erfinder: REDEMANN, Bernward, 68766 Hockenheim (DE); SCHERER, Vitalij, 69181 Leimen (DE); STUMPF, Martin, 68623 Lampertheim (DE)
(74) Vertreter: Copi, Joachim

(56) Entgegenhaltungen:
- WO-A1-2014/041155
- WO-A2-2010/051997
- DE-A1-102008 035 753
- DE-A1-102014 115 764

## Beschreibung

Die Erfindung betrifft einen Bremssattel einer Scheibenbremse für Kraftfahrzeuge, insbesondere für Nutzfahrzeuge. Bremssättel für Scheibenbremsen sind hinlänglich bekannt. In der Fachwelt ist eine Vielzahl an Varianten von Bremssätteln bekannt. Es gibt Festsättel, Schwimmsättel oder Pendelsättel. Die Erfindung betrifft einen Schwimmsattel, insbesondere einen Einkolbenschwimmsattel, auch Einstempelschwimmsattel genannt, wobei der Schwimmsattel auch unter dem Begriff Gleitsattel bekannt ist. Nachfolgend wird allgemein der Begriff "Bremssattel" verwendet. Der Bremssattel weist eine Zuspannseite und eine Felgenseite auf. Zwischen der Zuspannseite und der Felgenseite ist eine Öffnung zur Aufnahme einer Bremsscheibe, eines felgenseitigen Bremsbelags, sowie eines zuspannseitigen Bremsbelags angeordnet. Eine in dem Bremssattel an der Zuspannseite angeordnete Zuspanneinrichtung umfasst einen Drehhebel, eine Spindel mit einem Druckteller und eine Druckplatte. Die Zuspanneinrichtung spannt die Bremsscheibe über die Bremsbeläge zu. Der felgenseitige Bremsbelag ist fest an dem Bremssattel befestigt. Der Bremssattel ist über Gleitbuchsen axial in Richtung der Bremsscheibe verschiebbar ("schwimmend") auf einem Bremsträger gelagert. Darüber hinaus weist der Bremssattel zuspannseitig eine Flanschfläche zur Aufnahme einer Sensor-Rückstelleinheit auf. Die Sensor-Rückstelleinheit umfasst eine Sensor und eine Rückstelleinrichtung Die Rückstelleinrichtung dient zum Zu- und Rückstellen der Spindel, um beispielsweise im Servicefall Bremsbeläge tauschen zu können. Bei dem Sensor der Sensor-Rückstelleinheit handelt es sich um einen Verschleißssensor zur Überwachung der Bremsbelagstärke. Die Sensor-Rückstelleinheit kann durch Anstoßen eines Fremdkörpers in der Montage, während des Transports oder durch äußere Einflüsse im Schlechtweg (Steine, Äste, etc.) beschädigt werden. Eine Beschädigung der Sensor-Rückstelleinheit kann zu einem Ausfall bzw. zu einer Beeinflussung der Sensorfunktion und der Rückstelleinrichtung oder der Abdichtung des Bremseninnenraums führen. Durch das hohe Eigengewicht des Bremssattels kann auch eine Beschädigung der Sensor-Rückstelleinheit erfolgen, wenn der Bremssattel ohne spezielle Verpackung abgelegt oder zwischengelagert wird.

Aus der WO2007/140985A1 geht ein Bremssattel mit einer Sensor-Rückstelleinheit hervor. Die Sensor-Rückstelleinheit ist unterhalb einer Flanschfläche für einen Bremszylinder direkt an dem Gehäuse des Bremssattels angeordnet. Die vollflächige Anordnung der Sensor-Rückstelleinheit an dem Bremssattel schützt die Sensor-Rückstelleinheit gegen Stoß-und Schlagwirkung von äußeren Umwelteinflüssen, setzt aber eine Bearbeitung des Bremssattels in dem Bereich der Sensor-Rückstelleinheit voraus. Für die Anordnung der Sensor-Rückstelleinheit in dem Bremssattel wurde nach dem Gießverfahren der Bremssattel mittels Fräsverfahren nachbearbeitet, wobei Planfräsungen und Profilfräsungen vorgenommen worden sind. Die zusätzlichen Arbeitsschritte mittels der Fräswerkzeuge verursachen zusätzlich unerwünschte Kosten in der Herstellung und der Bearbeitungszeit des Bremssattels, wodurch sich die Fertigstellung des Bremssattels verlängert

Die WO-A-2014/041155 zeigt einen Bremssattel für eine Scheibenbremse mit einer Zuspannseite und einer Felgenseite, wobei der Bremssattel an der Zuspannseite einen Flansch mit einer Flanschfläche zur Anbindung einer Sensor-Rückstelleinheit aufweist. Der Flansch zur Anbindung der Sensor-Rückstelleinheit ist zwischen den Gleitbuchsen des Bremssattels angeordnet, wobei der Flansch eine umlaufende Rippe aufweist.

Aufgabe der Erfindung ist es einen Bremssattel bereit zu stellen, der einen kostenneutralen und sicheren Schutz der Sensor-Rückstelleinheit gegen Stoß- und Schlagwirkung vor äußeren Umwelteinflüssen bietet.

Die Aufgabe wird dadurch gelöst, dass ein Bremssattel an einer Zuspannseite, zwischen einer ersten Gleitbuchse und einer Flanschfläche, eine erste Rippe und/oder zwischen einer zweiten Gleitbuchse und der Flanschfläche, eine zweite Rippe aufweist. Je nach Anzahl und Anordnung eines Sensorsteckers der Sensor-Rückstelleinheit kann der Bremssattel eine Rippe oder zwei Rippen aufweisen. Die Rippe schützt den Bereich einer Sensor-Rückstelleinheit, der von einem Bremssattelgehäuse nicht abgedeckt ist. In einer bevorzugten Ausführungsform deckt die Rippe eine Sicke des Bremssattels ab. Ein Ausgießen der Sicke ist nicht wirtschaftlich und nicht kostenneutral. Entgegen der Anordnung einer Rippe werden mehr Rohstoffe (z.B. Stahl) benötigt.

In einer weiteren bevorzugten Ausgestaltung entspricht die Außenkontur der ersten Rippe und/oder die Außenkontur der zweiten Rippe der Außenkontur der Sensor-Rückstelleinheit oder die Außenkontur der ersten Rippe und/oder die Außenkontur der zweiten Rippe ist größer als die Außenkontur der Sensor-Rückstelleinheit.

Die Sensor-Rückstelleinheit ist ein eigenständiges Bauteil, welches je nach Kundenanforderung in der Geometrie bzw. im Umfang unterschiedlich ausgeführt sein kann. Der variable Umfang der Sensor-Rückstelleinheit erfordert eine Anpassung der Rippe entsprechend dem Umfang der Sensor-Rückstelleinheit. Nur bei einer vollständigen Abdeckung der Sensor-Rückstelleinheit von dem Bremssattelgehäuse und der Rippe ist ein sicherer Schutz gegen äußere Umwelteinflüsse gewährleistet.

Es hat sich weiterhin gezeigt, dass die erste Rippe oder die zweite Rippe in einer weiteren Ausgestaltung mit einen Abstand zu der Sensor-Rückstelleinheit angeordnet ist. In anderen Worten ausgedrückt, berühren sich die erste Rippe und die Sensor-Rückstelleinheit oder die zweite Rippe und die Sensor-Rückstelleinheit nicht. Eine Nachbearbeitung der Rippenflächen mit einem Fräswerkzeug ist nicht notwendig. Die erste Rippe oder die zweite Rippe dient nur dem Schutz der Sensor-Rückstelleinheit gegen äußere Umwelteinflüsse. Eine Nachbearbeitung ist nur an den Flanschflächen des Teilstücks des Bremssattelgehäuses notwendig, nicht aber an der ersten Rippe oder der zweiten Rippe.

Die erste Rippe und/oder die zweite Rippe sind in einer weiteren Ausführung aus dem Bremssattelgehäuse ausgeformt. Der Bremssattel wird in einem Gussverfahren mit der ersten Rippe und/oder der zweiten Rippe gegossen. Zusätzliche Arbeitsschritte wie Schweißen, Nieten, Schrauben oder Kleben sind zur Anordnung der ersten Rippe und/oder der zweiten Rippe an den Bremssattel sind nicht erforderlich.

Die erste Rippe und/oder die zweite Rippe ist radial, entgegengesetzt der Richtung einer Bremszylinderflanschfläche, an dem Bremssattelgehäuse angeordnet. Die erste Rippe und/oder die zweite Rippe sind ein Teil des Bremssattelgehäuses. Konkret sind die erste Rippe und/oder die zweite Rippe zwischen einem Teilstück des Bremssattelgehäuses und der Flanschfläche zur Aufnahme der Nachstelleinrichtung angeordnet. Die Flanschflächen der Sensor-Rückstelleinheit stehen gegenüber dem Bremssattelgehäuse und der ersten Rippe und/oder der zweiten Rippe, entgegengesetzt einer Felgenseite des Bremssattels, axial hervor. Das heißt, dass zwischen der Sensor-Rückstelleinheit und der ersten Rippe und/oder der zweiten Rippe ein Abstand vorhanden ist.

Der Bremssattel und die erste Rippe und/oder die zweite Rippe sind in einer weiteren Ausgestaltung aus dem gleichen Material gebildet. Bevorzugt handelt es sich bei dem Material um Gusseisen.

In einer letzten Ausführung weist die erste Rippe und/oder die zweite Rippe eine Breite von mindestens 4 mm auf. Eine geringere Breite der ersten Rippe und/oder der zweiten Rippe würde zu vorzeitigen Brucherscheinungen führen, wodurch der Schutz der Sensor-Rückstelleinheit nicht mehr gewährleistet ist. Besonders bevorzugt weist die erste Rippe und/oder die zweite Rippe eine Breite von 4,5 mm auf. Eine breitere Rippe erhöht das Gewicht und den Materialaufwand des Bremssattels, was aus Kostengründen nicht erwünscht ist.

Nachfolgend werden ausgewählte Ausführungsbeispiele der Erfindung anhand der beigefügten Figuren erläutert.

Es zeigt:
Fig. 1 einen Bremssattel mit einer ersten Rippe, einer zweiten Rippe und einer Sensor-Rückstelleinheit,
Fig. 2 einen Bremssattel mit einer ersten Rippe, einer zweiten Rippe und einer zweiten Anordnung der Sensor-Rückstelleinheit,
Fig. 3 einen Bremssattel mit einer ersten Rippe ohne eine Sensor-Rückstelleinheit,
Fig. 4-5 die Unterseite eines Bremssattels mit einer ersten Rippe in einer Detailansicht,
Fig. 6 die Unterseite eines Bremssattels mit einer ersten Rippe und einer zweiten Rippe.

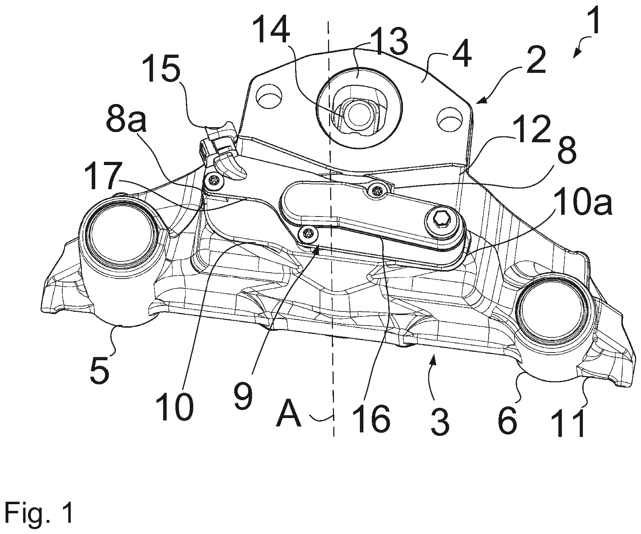

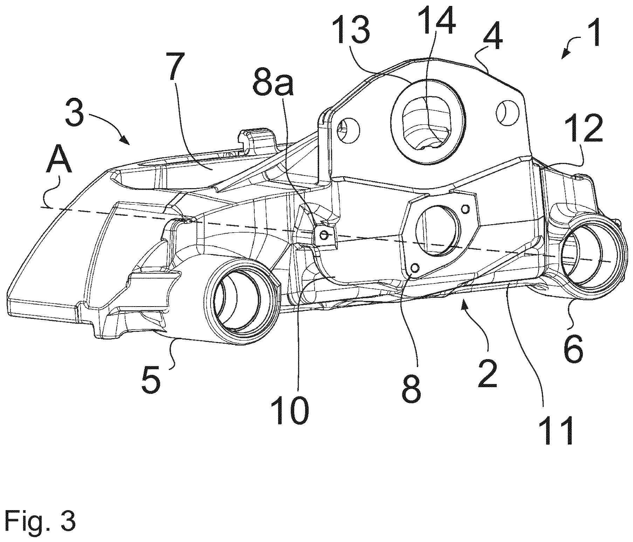

Fig. 1 zeigt einen Bremssattel 1 von der Zuspannseite. Der Bremssattel 1 ist aus Gusseisen hergestellt und weist an der Zuspannseite 2 eine Bremszylinderflanschfläche 4 auf. Mittig der Bremszylinderflanschfläche 4 ist eine Öffnung 13 zur Betätigung eines Drehhebels 14 angeordnet. Zwischen der Zuspannseite 2 und einer Felgenseite 3 weist der Bremssattel 1 eine Bremsscheibenöffnung 7 (Fig. 3) zur Aufnahme einer nicht gezeigten Bremsscheibe auf. Während eines Zuspannvorgangs spannt der Drehhebel 14 die Bremsscheibe über eine Zuspanneinrichtung zu. Zwei achsparallel zu einer Achse A des Bremssattels 1 angeordnete Gleitbuchsen 5, 6 verschieben den Bremssattel 1 während eines Bremsvorgangs axial auf einem nicht gezeigten Bremsträger. Radial unterhalb der Bremszylinderflanschfläche 4, in Richtung der ersten Gleitbuchse 5 und der zweiten Gleitbuchse 6, weist der Bremssattel 1 ein Teilstück 12 eines Bremssattelgehäuses 11 zur Aufnahme von Flanschflächen 8, 8a auf. Über die Flanschflächen 8, 8a ist eine Sensor-Rückstelleinheit 9 an den Bremssattel 1 angeordnet. Die Sensor-Rückstelleinheit 9 weist einen Sensorstecker 15 und eine Rückstelleinrichtung 16 und eine Trägerplatte 17 zur Aufnahme des Sensorsteckers 15 und der Rückstelleinrichtung 16 auf. Die Rückstelleinrichtung 16 ist dezentral, also achsparallel zur Achse A des Bremssattels 1, an dem Bremssattel 1 angeordnet. Zum Schutz der Sensor-Rückstelleinheit 9 vor Umwelteinflüssen sind an dem Teilstück 12 des Bremssattelgehäuses 11, radial entgegengesetzt der Richtung der Bremszylinderflanschfläche 4, zusätzlich eine erste Rippe 10 und eine zweite Rippe 10a aus dem Bremssattelgehäuse 11 geformt. Die erste Rippe 10 und die zweite Rippe 10a bilden mit dem Flansch 8 zur Aufnahme der Rückstelleinrichtung 16 eine Einheit. Die Flanschflächen 8, 8a stehen, gegenüber der ersten Rippe 10 und der zweiten Rippe 10a, axial hervor. Die erste Rippe 10 und die zweite Rippe 10a ermöglichen in dem Ausführungsbeispiel eine Anordnung der Sensor-Rückstelleinheit 9 entgegengesetzt dem Sensorstecker 15 oder in Richtung des Sensorsteckers 15.

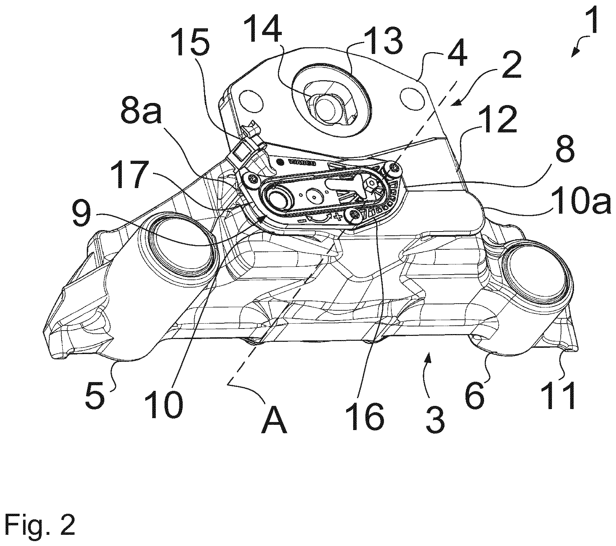

Fig. 2 zeigt einen Bremssattel 1 nach Fig.1. Lediglich die Rückstelleinrichtung 16 ist axial, bezogen auf die Achse A des Bremssattels 1, angeordnet. Außerdem ist die Sensor-Rückstelleinheit 9 an der ersten Rippe 10 angeordnet.

Fig. 3 zeigt den Bremssattel nach Fig. 1 und 2 in einer seitlich gedrehten Perspektive. Im Unterschied zu den Figuren 1 und 2 ist nur eine erste Rippe 10 aus dem Bremssattel ausgeformt. Zudem ist der Bremssattel 1 ohne eine Sensor-Rückstelleinheit 9 gezeigt. Fig. 3 verdeutlicht die Anbindung der ersten Rippe 10 an dem Teilstück 12 des Bremssattelgehäuses 11 und die Anbindung der ersten Rippe 10 an dem Flansch 8 zur Aufnahme der Rückstelleinrichtung 16.

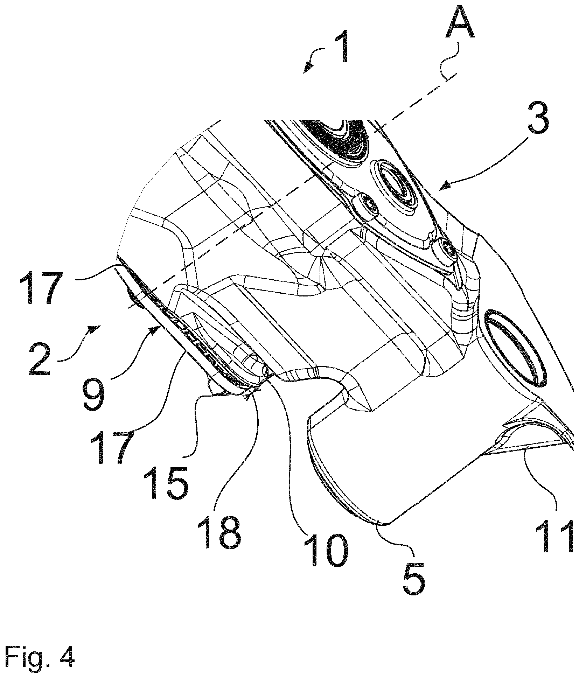

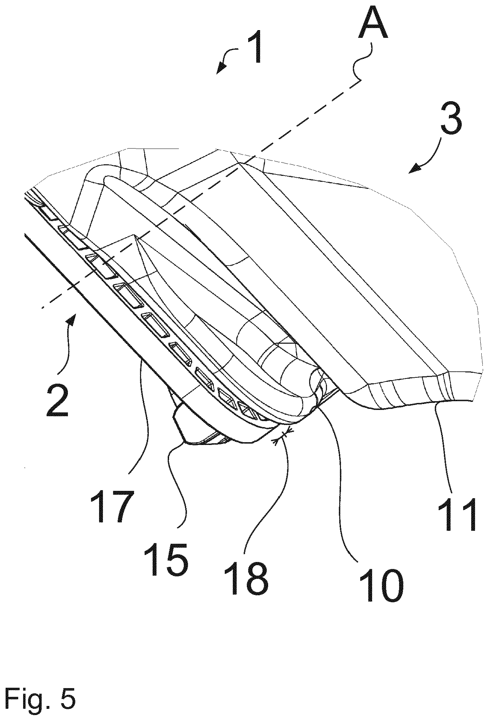

Fig. 4 und 5 zeigen einen Teilausschnitt des Bremssattels 1 nach den Fig. 1 bis 3 mit einer Anordnung der Sensor-Rückstelleinheit 9 nach Fig. 2. Insbesondere verdeutlicht Fig. 4 die Ausformung der ersten Rippe 10 aus den Bremssattelgehäuse 11. Darüber hinaus ist im Detail gezeigt, dass die erste Rippe 10 nicht an der Trägerplatte 17 der Sensorrückstelleinrichtung 9 anliegt. Mit anderen Worten ausgedrückt, sind die Trägerplatte 17 der Sensorrückstelleinrichtung 9 und die erste Rippe 10 mit einen Abstand 18 angeordnet.

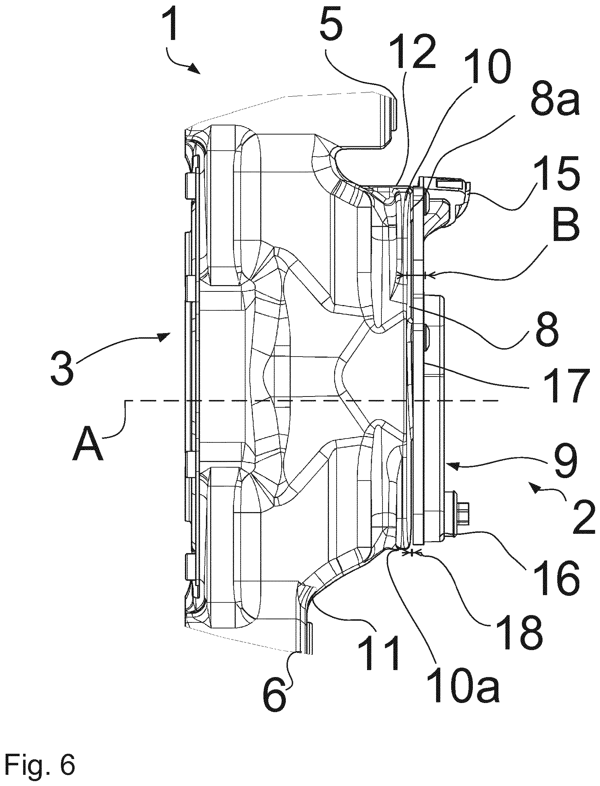

Fig. 6 zeigt den Bremssattel 1 mit einer ersten Rippe 10 und einer zweiten Rippe 10a nach den Fig. 1 und 2 von der Unterseite, wobei die Rückstelleinheit 9 nach Fig. 1 angeordnet ist. Die Sensor-Rückstelleinheit 9 liegt nur an den Flanschflächen 8, 8a und nicht an der ersten Rippe 10 oder der zweiten Rippe 10a an. Die erste Rippe 10 und die zweite Rippe 10a weisen eine Breite B von 4,5 mm auf.

### Bezugszeichenliste als Teil der Beschreibung

- 1: Bremssattel
- 2: Zuspannseite
- 3: Felgenseite
- 4: Bremszylinderflanschfläche
- 5: erste Gleitbuchse
- 6: zweite Gleitbuchse
- 7: Bremsscheibenöffnung
- 8, 8a: Flanschfläche
- 9: Sensor-Rückstelleinheit
- 10: erste Rippe
- 10a: zweite Rippe
- 11: Bremssattelgehäuse
- 12: Teilstück des Bremssattelgehäuses 11
- 13: Öffnung der Bremszylinderflanschfläche 4
- 14: Drehhebel
- 15: Sensorstecker
- 16: Rückstelleinrichtung
- 17: Trägerplatte
- 18: Abstand der Rippe 10, 10a zur Trägerplatte 17
- A: axiale Achse
- B: Breite der Rippe (10)

## Patentansprüche

1. Bremssattel (1) für eine Scheibenbremse mit einer Zuspannseite (2) und einer Felgenseite (3) umfassend:
a. eine an der Zuspannseite (2) angeordnete Bremszylinderflanschfläche (4) zur Aufnahme eines Bremszylinders,
b. eine erste Gleitbuchse (5) und eine zweite Gleitbuchse (6) zur axialen Verschiebung des Bremssattels (1) auf einem Bremsträger,
c. zwei an der Zuspannseite (2), zwischen der ersten Gleitbuchse (5) und der zweiten Gleitbuchse (6), achsparallel angeordneten Flanschflächen (8, 8a) zur Aufnahme einer Sensor-Rückstelleinheit (9),
**dadurch gekennzeichnet, dass** der Bremssattel (1) an der Zuspannseite (2) zwischen der ersten Gleitbuchse (5) und der Flanschfläche (8), radial, entgegengesetzt der Richtung der Bremszylinderflanschfläche (4), eine erste Rippe (10) und/oder zwischen der zweiten Gleitbuchse (6) und der Flanschfläche (8) eine zweite Rippe (10a) aufweist, wobei die Flanschflächen (8, 8a) zur Aufnahme der Sensor-Rückstelleinheit (9) gegenüber einem Bremssattelgehäuse (11) und der ersten Rippe (10) und/oder der zweiten Rippe (10a), entgegengesetzt einer Felgenseite des Bremssattels (1), axial hervor stehen und
wobei die erste Rippe (10) oder die zweite Rippe (10a) mit einem axialen Abstand (18) zu der Sensor-Rückstelleinheit (9) angeordnet ist.

2. Bremsattel (1) nach Anspruch 1, **dadurch gekennzeichnet, dass** die Außenkontur der ersten Rippe (10) und/oder die Außenkontur der zweiten Rippe (10a) der Außenkontur der Sensor-Rückstelleinheit (9) entspricht oder die Außenkontur der ersten Rippe (10) und/oder die Außenkontur der zweiten Rippe (10a) größer ist, als die Außen- kontur der Sensor-Rückstelleinheit (9).

3. Bremsattel (1) nach einem der vorangegangenen Ansprüche, **dadurch gekennzeichnet, dass** die erste Rippe (10) und/oder die zweite Rippe (10a) aus dem Bremssattelgehäuse (11) geformt ist.

4. Bremsattel (1) nach einem der vorangegangenen Ansprüche, **dadurch gekennzeichnet, dass** die erste Rippe (10) und/oder die zweite Rippe (10a) radial, entgegengesetzt der Richtung der Bremszylinderflanschfläche (4), an dem Bremssattelgehäuse (11) angeordnet ist.

5. Bremsattel (1) nach einem der vorangegangenen Ansprüche, **dadurch gekennzeichnet, dass** die erste Rippe (10) und/oder die zweite Rippe (10a) aus dem gleichen Material gebildet ist, wie der Bremssattel (1).

6. Bremsattel (1) nach einem der vorangegangenen Ansprüche, **dadurch gekennzeichnet, dass** die erste Rippe (10) und/oder die zweite Rippe (10a) eine Breite (B) von mindestens 4 mm aufweist.

## Claims

1. Brake caliper (1) for a disk brake, having a tensioning side (2) and a rim side (3), comprising:
a. a brake cylinder flange face (4) which for receiving a brake cylinder is disposed on the tensioning side (2),
b. a first sliding bush (5) and a second sliding bush (6) for the axial displacement of the brake caliper (1) on a brake support,
c. two flange faces (8, 8a) which for receiving a sensor resetting unit (9) are disposed in an axially parallel manner on the tensioning side (2) between the first sliding bush (5) and the second sliding bush (6), **characterized in that** the brake caliper (1) on the tensioning side (2) between the first sliding bush (5) and the flange face (8), in a manner radially counter to the direction of the brake cylinder flange face (4), has a first rib (10) and/or between the second sliding bush (6) and the flange face (8) has a second rib (10a), wherein the flange faces (8, 8a) for receiving the sensor restoring unit (9) in a manner axially counter to a rim side of the brake caliper (1) project in relation to a brake caliper housing (11) and the first rib (10) and/or the second rib (10a), and
wherein the first rib (10) or the second rib (10a) is disposed at an axial spacing (18) from the sensor resetting unit (9).

2. Brake caliper (1) according to Claim 1, **characterized in that** the external contour of the first rib (10) and/or the external contour of the second rib (10a) correspond/corresponds to the external contour of the sensor resetting unit (9), or the external contour of the first rib (10) and/or the external contour of the second rib (10a) are/is larger than the external contour of the sensor resetting unit (9).

3. Brake caliper (1) according to one of the preceding claims, **characterized in that** the first rib (10) and/or the second rib (10a) are/is shaped from the brake caliper housing (11).

4. Brake caliper (1) according to one of the preceding claims, **characterized in that** the first rib (10) and/or the second rib (10a) are/is disposed on the brake caliper housing (11) in a manner radially counter to the direction of the brake cylinder flange face (4).

5. Brake caliper (1) according to one of the preceding claims, **characterized in that** the first rib (10) and/or the second rib (10a) are/is formed from the same material as the brake caliper (1).

6. Brake caliper (1) according to one of the preceding claims, **characterized in that** the first rib (10) and/or the second rib (10a) have/has a width (B) of at least 4 mm.

## Revendications

1. Étrier de frein (1) pour un frein à disque, comprenant un côté serrage (2) et un côté jante (3), comprenant :
a. une surface de bride de cylindre de frein (4) disposée sur le côté serrage (2) pour recevoir un cylindre de frein,
b. un premier manchon de coulissement (5) et un deuxième manchon de coulissement (6) pour le coulissement axial de l'étrier de frein (1) sur un support de frein,
c. deux surfaces de bride (8, 8a) disposées sur le côté serrage (2) avec leurs axes parallèles entre le premier manchon de coulissement (5) et le deuxième manchon de coulissement (6) pour recevoir une unité de rappel de capteur (9),
**caractérisé en ce que** l'étrier de frein (1) présente, au niveau du côté serrage (2) entre le premier manchon de coulissement (5) et la surface de bride (8), radialement, à l'opposé de la direction de la surface de bride du cylindre de frein (4), une première nervure (10) et/ou entre le deuxième manchon de coulissement (6) et la surface de bride (8), une deuxième nervure (10a), les surfaces de bride (8, 8a), pour recevoir l'unité de rappel de capteur (9), faisant saillie axialement par rapport à un boîtier d'étrier de frein (11) et à la première nervure (10) et/ou à la deuxième nervure (10a), à l'opposé d'un côté jante de l'étrier de frein (1) et
la première nervure (10) ou la deuxième nervure (10a) étant disposée à une distance axiale (18) par rapport à l'unité de rappel de capteur (9).

2. Étrier de frein (1) selon la revendication 1, **caractérisé en ce que** le contour extérieur de la première nervure (10) et/ou le contour extérieur de la deuxième nervure (10a) correspondent au contour extérieur de l'unité de rappel de capteur (9) ou le contour extérieur de la première nervure (10) et/ou le contour extérieur de la deuxième nervure (10a) sont supérieurs au contour extérieur de l'unité de rappel de capteur (9).

3. Étrier de frein (1) selon l'une quelconque des revendications précédentes, **caractérisé en ce que** la première nervure (10) et/ou la deuxième nervure (10a) sont formées à partir du boîtier d'étrier de frein (11).

4. Étrier de frein (1) selon l'une quelconque des revendications précédentes, **caractérisé en ce que** la première nervure (10) et/ou la deuxième nervure (10a) sont disposées radialement à l'opposé de la direction de la surface de bride de cylindre de frein (4), au niveau du boîtier d'étrier de frein (11) .

5. Étrier de frein (1) selon l'une quelconque des revendications précédentes, **caractérisé en ce que** la première nervure (10) et/ou la deuxième nervure (10a) sont formées à partir du même matériau que l'étrier de frein (1).

6. Étrier de frein (1) selon l'une quelconque des revendications précédentes, **caractérisé en ce que** la première nervure (10) et/ou la deuxième nervure (10a) présentent une largeur (B) d'au moins 4 mm.
